# EUROPÄISCHE PATENTSCHRIFT

(11) **EP 2 636 327 B1**
(45) Veröffentlichungstag und Bekanntmachung des Hinweises auf die Patenterteilung: **14.05.2014**
(21) Anmeldenummer: 12158849.5
(22) Anmeldetag: 09.03.2012
(51) Int. Cl.: A43B 17/00, A43B 17/14, A43B 7/28, A43B 13/04

(54) **Schuhsohlenkunststoff**
Shoe sole plastic
Plastique pour semelle de chaussure

(43) Veröffentlichungstag der Anmeldung: 11.09.2013
(73) Patentinhaber: Spannrit Schuhkomponenten GmbH, 63801 Kleinostheim (DE)
(72) Erfinder: Katzer, Roland, 63801 Kleinostheim (DE)
(74) Vertreter: Erhardt, Martin

(56) Entgegenhaltungen:
- DE-A1- 2 224 967
- DE-A1- 3 437 786

## Beschreibung

Die Erfindung betrifft einen Schuhsohlenkunststoff, insbesondere einen elastischen Schuhsohlenkunststoff, zur Herstellung von Schuheinlegesohlen, Schuhinnensohlen oder orthopädischer Komponenten hiervon. Die Erfindung betrifft ferner die Herstellung orthopädischer Schuheinlegesohlen mittels des erfindungsgemäßen Schuhsohlenkunststoffes. Der erfindungsgemäße Schuhsohlenkunststoff findet hierbei in den verschiedenen Herstellungsverfahren bei der Herstellung von Schuheinlegesohlen oder Schuhinnensohlen oder Komponenten hiervon Anwendung. Dabei kann der erfindungsgemäße Schuhsohlenkunststoff sowohl als formgebender als auch als Einzelteile verbindender Kunststoff verwendet werden. Die Erfindung betrifft ferner thermoplastisch verformbare Schuheinlegesohlen bzw. Schuhinnensohlen, die speziell unter orthopädischen Gesichtspunkten beispielsweise patientenindividuell an einen Leisten oder eine Fußform angepasst werden können. Die Erfindung betrifft weiterhin Verfahren für eine Anpassung thermoplastisch verformbarer Schuheinlege- bzw. Schuhinnensohlen oder Komponenten hiervon. Von der Erfindung betroffen sind insbesondere Kunststoffe, die sich nach Erwärmung plastisch verformen lassen und nach einem Abkühlen die plastisch verformte Gestalt beibehalten.

Im Weiteren betrifft die Erfindung insbesondere Schuheinlegesohlen, Schuhinnensohlen und Komponenten hiervon. Die Erfindung kann aber auch in Brandsohlen oder Außensohlen Anwendung finden, soweit die Funktionalität und der eigentliche Einsatz-Zweck von Brand- oder Außensohlen durch die Erfindung nicht beeinträchtigt wird. Bevorzugt findet die Erfindung Eingang in orthopädisch anpassbare Schuhsohlen, die bevorzugt von einem Schuhorthopädietechniker oder einem Orthopädiemeister oder einem Orthopäden an einen Fuß eines Patienten individuell angepasst werden können. Die Erfindung kann aber auch in der Schuhherstellung und der Anpassung für bspw. Skischuhe, Bergschuhe, Wander- oder Trekkingschuhe, Sportschuhe, Arbeitsschuhe etc. Anwendung finden. Auch eine Anpassung erfindungsgemäß hergestellter Sohlen von jedermann zuhause ist von der Erfindung umfasst.

Die Erfindung betrifft im Allgemeinen Schuhsohlen und Komponenten von Schuhsohlen oder orthopädische Komponenten für Schuhe, die aus orthopädischen oder komfortbedingten Gründen insbesondere an eine individuelle Fußform anpassbar sein sollen. Dabei sind auch Sohlen und Komponenten hiervon umfasst, die universell zur Korrektur bestimmter Fehlstellungen, wie Senkfuss, Spreizfuss oder ähnliches eingesetzt werden.

Herkömmlich werden als thermoplastische Kunststoffe bevorzugt EVA (Ethylen-Vinyl-Acetat) oder TPU (thermoplastisches Polyurethan), aber auch Silikonkautschuk, Polyvinylchlorid (PVC), Polyethylen (PE), Polypropylen (PP) andere Thermoplasten in der Schuherstellung verwendet. All diese bekannten thermoplastischen Kunststoffe können nach Einwirkung von Wärme überhalb einer durch das Material vorgegebenen Erweichungstemperatur plastisch verformt werden und behalten die verformte Gestalt nach einem Abkühlen bei. Die aus thermoplastischen Kunststoffen hergestellten Schuhsohlen, insbesondere Schuhinnensohlen und Schuheinlegesohlen, können jedoch zum Erreichen dieser Erweichungstemperatur meist nur von außen, beispielsweise in einem Ofen oder durch einen Heißluftföhn, auf Erweichungstemperatur erwärmt werden. Damit diese Schuhsohlen, die mit thermoplastischen Kunststoffen gemäß dem Stand der Technik hergestellt werden, verformt werden können, muss entweder die komplette Sohle auf Erweichungstemperatur gebracht werden, oder nur Teilbereiche von außen so weit erwärmt werden, dass diese verformbar werden. Meist liegt die Erweichungstemperatur weit über 40°C, wodurch eine Anpassung der Sohle im erwärmten Zustand durch Anlegen an den Fuß eines Patienten oder durch Handarbeit unmöglich wird. Für die Anpassung solcher Sohlen ist daher regelmäßig ein Leisten oder eine anderweitig erzeugte Fußform aus einem wärmebeständigen Material erforderlich. Dies erhöht die Kosten für eine anpassbare Sohle erheblich, da zusätzlich zur Sohle eine Positiv-Fuß-Form zur Anpassung erstellt werden muss.

Es besteht somit ein Bedarf an einem thermoplastischen Sohlenwerkstoff, speziell an einem thermoplastischen Sohlenkunststoffwerkstoff, der in einfacher Art und Weise über seine Erweichungstemperatur erwärmt werden kann, wobei die aus diesem Werkstoff hergestellten Schuhsohlen am Fuß des Trägers der Schuhsohle oder manuell angepasst werden können, ohne dass eine zusätzliche Anpassform nötig ist.

Aus DE 34 37 786 A1, von der auch im Oberbegriff des Anspruchs 1 ausgegangen wird, ist ein Verfahren zum Herstellen von Schuheinlegesohlen bekannt, bei dem ein Paar Sohlen zunächst mit ungefährer Passform hergestellt werden. Die genaue Anpassung an die geforderte Passform der Schuheinlegesohlen soll danach damit erreicht werden, dass die Schuheinlegesohlen mit Mikrowellen bestrahlt werden, wodurch sich der thermoplastische Werkstoff über seine Erweichungstemperatur erwärmt. Die so erwärmte Sohle kann dann durch Anziehen der Schuhe, in die die Schuheinlegesohle eingelegt wurde, der Fußform angepasst werden. Eine äußerliche Erwärmung der Schuhsohlen ist hier nicht notwendig, jedoch muss dafür gesorgt werden, dass der eingesetzte Kunststoff durch Beimengen von Füllstoffen mittels Mikrowellen angeregt werden kann. Die Erwärmung der Schuheinlegesohlen mittels Mikrowellenabsorption soll dadurch erreicht werden, dass dem Sohlenwerkstoff Füllstoffe zugegeben werden, welche eine starke Mikrowellenabsorption zeigen. Hierzu wird vorgeschlagen beispielsweise blättriges Graphit oder auch "Flocken-Graphit" zu verwenden. Als weitere Stoffe mit hoher Mikrowellenabsorption kommen gemäß DE 34 37 786 A1 auch Getreidemehl, Gips sowie Wasser oder feuchtigkeitenthaltende Stoffe in Betracht.

Ausweislich der DE 34 37 786 A1 findet dieses Verfahren speziell bei Schuheinlegesohlen Anwendung, die aus thermoplastischem Schaumkunststoff hergestellt sind, da schaumartige Werkstoffe über eine geringe Wärmeleitfähigkeit verfügen und dem Fuß selbst somit nur eine geringe Wärmebelastung zukommt, auch wenn der Werkstoff auf 80°-160°C erwärmt werden muss, damit die Erweichungstemperatur erreicht wird.

DE 34 05 964 A1, welche die Stammanmeldung zu DE 34 37 786 A1 ist, beschreibt das Aushärten von zur Schuheinlegesohlen-Herstellung verwendeten Kunststoffen mittels Mikrowellen und gibt an, Flockengraphit als Füllstoff in einer Menge von 1 bis 10 Gewichtsprozent dem verwendeten Kunststoff zur Schuhsohlenherstellung beizumengen, wobei bevorzugt 3 bis 8 Gewichtsprozent beigemengt werden, um bspw. Silikonkautschuk nach einer individuellen Anpassung an einen Fuß auszuhärten. DE 34 37 786 A1 gibt keine Mengenangaben für Zusatzstoffe an, die notwendig sind, um ein Erwärmen des ausgehärteten Kunststoffs mittels Mikrowellen auf Erweichungstemperatur zu erreichen.

Versuche haben ergeben, dass mit den in DE 34 37 786 A1 angegebenen Mengen erst ab einer Beimengung von zumindest 3 Gew.-% an "Flocken-Graphit" eine nachweisbare Mikrowellenabsorption auftritt, damit die bspw. mit Flocken-Graphit durchsetzte Schuhsohle erwärmt werden kann. DE 2 224 967 A1 bestätigt dies und fordert daher 3 Gew.-% als untere Grenze für die Beimischung Mikrowellen-aktivierbarer Zusatzstoffe. Hierbei, d.h. mit 3 %-tiger Beimischung von Flocken-Graphit, ist jedoch eine lange Einwirkzeit der Mikrowellen erforderlich, die im Bereich von mehreren Minuten liegt, bis die Erweichungstemperatur des Kunststoffes erreicht wird. Die Einwirkzeit der Mikrowellen und damit auch die Leistung, die mit den Mikrowellen auf die Schuheinlegesohlen einwirkt, kann bei Verwendung von Flocken-Graphit nur durch Erhöhung der Konzentration bzw. der Gewichtsanteile von Graphit verringert werden. So haben Versuche weiter gezeigt, dass in einem Bereich einer Flocken-Graphit oder Rußbeimischung von 8 bis 10 Gew.-%, ein gutes Verhältnis von Mikrowellenleistung und Einwirkzeit erreicht werden kann.

Jedoch ist mit diesen hohen Beimischungen von 8% und mehr der genannten Stoffe (Flocken-Graphit, blättrigen Graphit, Ruß, Getreidemehl, Gips, Wasser oder Feuchtigkeit enthaltende Stoffe) eine starke Beeinflussung der Eigenschaften des eingesetzten thermoplastischen Kunststoff-Materials verbunden. So hat sich beispielsweise bei der Verwendung von 5 Gew.-% oder mehr an Graphit herausgestellt, dass die so hergestellten Schuheinlegesohlen nicht nur ein unansehnliches Erscheinungsbild erhalten, sondern auch in ihren elastischen und formstabilen Eigenschaften stark nachlassen bzw. deren Haptik als schmierig bzw. seifig empfunden wird. So zeigen Schuheinlegesohlen mit einem Graphitanteil von mehr als 5% Risse in der Oberfläche, speziell dann, wenn diese beim Gehen belastet werden, und durch das Gewicht des Trägers abrollen und gewalkt werden. Es kommt hierbei zum Herauslösen von Bruchstücken aus der Sohle, die ein unangenehmes Tragegefühl der Schuhinnensohle bzw. Schuheinlegesohle hervorrufen. Solche "Sohlen-Krümmel" sind höchst unerwünscht.

Bei einem Verringern des Graphitanteiles auf Gewichtsprozente kleiner 5% hat sich gezeigt, dass eine Mikrowelleneinwirkung durch ein handelsübliches Mikrowellengerät mit einer Leistung von ca. 1000 Watt mehrere Minuten übersteigt, bis es zum Erreichen der Erweichungstemperatur kommt. Ein Erreichen der Erweichungstemperatur in weniger als einer Minute ist wünschenswert und unter ökonomischen als auch ökologischen Gesichtspunkten bevorzugt. Jedoch zeigt der Stand der Technik, dass eine Reduzierung der Einwirkzeit nur mit einer Erhöhung der Anteile an Füllstoffen zu erreichen ist, was wiederum einen steigenden negativen Effekt auf den zur Sohlenherstellung verwendeten Kunststoff hat.

Der Erfindung liegt also die Aufgabe zugrunde einen Schuhsohlenkunststoff bereitzustellen, der mittels Mikrowellenabsorption in kürzester Zeit auf Erweichungstemperatur gebracht werden kann, wobei die elastischen und thermoplastischen Eigenschaften des Trägerkunststoffes durch Beimischung eines Füllstoffes nicht oder nur unwesentlich beeinflusst werden sollen. Darüber hinaus soll das eingesetzte Material kostengünstig in der Herstellung sowie einfach in der Verarbeitung zu Schuhinnensohlen bzw. Schuheinlegesohlen oder Komponenten hiervon sein.

Die Aufgabe wird erfindungsgemäß durch einen Schuhsohlenkunststoff für die Herstellung von Schuheinlegesohlen oder Schuhinnensohlen oder Komponenten hiervon gemäß Anspruch 1 gelöst. Die Aufgabe wird ferner durch elastische, orthopädisch vorgeformte Schuheinlegesohlen, Schuhinnensohlen oder Komponenten hiervon gemäß Anspruch 9 gelöst, die mit einem Schuhsohlenkunststoff gemäß Anspruch 1 hergestellt wurden. Die Aufgabe wird darüber hinaus mit einem Verfahren zum Herstellen eines Schuhsohlenkunststoffs gemäß Anspruch 15 gelöst, und mit einem Verfahren zum Herstellen einer Schuheinlegesohle, einer Schuhinnensohle oder einer Komponente hiervon gemäß Anspruch 16. Die jeweiligen Unteransprüche sind auf bevorzugte Ausführungsformen gerichtet.

Erfindungsgemäß wird den zur Herstellung von Schuheinlegesohlen oder Schuhinnensohlen oder orthopädischer Komponenten verwendeten herkömmlichen Schuhsohlenkunststoffen Nanopartikel als Füllstoff beigemengt, die durch Mikrowellen anregbar sind. Generell ist die Beimengung eines Füllstoffs zu einem thermoplastischen oder duroplastischen Kunststoff notwendig, um eine Mikrowellenanregbarkeit zu erreichen, da solche Kunststoffe in der Regel durch Mikrowellen nicht energetisch anregbar sind. Überraschenderweise entgegen der Erfahrung aus dem Stand der Technik hat sich gezeigt, dass durch die Verwendung von Nanopartikeln die Menge an Füllstoffen deutlich reduziert werden kann, die zum Erreichen einer technisch, ökonomisch und ökologisch sinnvollen energetischen Anregbarkeit durch Mikrowellen führt. Schon geringste Mengen beigefügter Nanopartikel erzielen überraschenderweise eine hohe Mikrowellenabsorption, wodurch die Schuheinlegesohle, die mit einem derartig durchsetzten bzw. versetzten Kunststoff hergestellt wurde, mittels eines herkömmlichen Mikrowellengeräts schnell in einen verformbaren Zustand gebracht werden kann. Dabei ist es nicht notwendig, dass die vollständige Sohle, d.h. das gesamte Material der Sohle durch und durch auf Erweichungstemperatur gebracht wird. Schon eine geringe Energiemenge, die mittels Mikrowellen auf die Nanopartikel eingebracht wird genügt, damit die Schuhsohle verformbar wird. Damit kann die Sohle insbesondere binnen Sekunden auf Erweichungstemperatur gebracht werden, wobei auch ein wiederholtes Erwärmen zum stufenweisen Anpassen einer Sohle möglich ist.

Erfindungsgemäß können alle bei der Schuhsohlenherstellung verwendeten Kunststoffe mit Nanopartikel versetzt werden, wobei eine Beimengung der Nanopartikel bevorzugt vor dem Einsatz des Kunststoffs in der Schuhsohlenherstellung erfolgt. Die bei der Schuhsohlenherstellung verwendeten Kunststoffe sind einerseits Kunststoffe, die zum Verbinden zweier Teile einer Schuheinlegesohle bzw. Schuhinnensohle verwendet werden, wie beispielsweise ein Heißkleber oder auch Schmelzkleber genannt. Andererseits sind dies Kunststoffe, die in der Schuheinlegesohlen- und Schuhinnensohlenherstellung verwendet werden, mit denen die Form der Schuheinlegesohle bzw. der Schuhinnensohle gebildet wird. Dies können beispielsweise Gießmaterialien wie Polyurethan (PP), Silikonkautschuk, EVA, PE, PP und andere übliche Kunststoffe sein.

Eine weitere Gruppe der Kunststoffe, die in der Schuheinlegesohlen- bzw. Schuhinnensohlenherstellung Verwendung finden, sind die sogenannten Schäumkunststoffe, welche durch Zusammengeben von zwei oder mehr Komponenten einen Schaumkunststoff bilden. Diese werden getrennt voneinander in eine Ausschäumform eingebracht und bilden einen offen- oder geschlossenzelligen bzw. porigen Schaumkunststoff, der in einer Ausschäumform die Sohlenform ausbildet. Hier ist insbesondere PU-Schaum zu nennen, welcher aus einem Isocyanat und einem Polyol gebildet wird. Andere Kunststoffe, wie beispielsweise EVA, können ebenfalls in einem Schäumverfahren aufgeschäumt werden, wobei hier jedoch pulverförmiges EVA aufgeschäumt wird.

Durch die Verwendung von Nanopartikeln als Füllstoff für Kunststoffe zur Herstellung von Schuheinlegesohlen oder Schuhinnensohlen oder Komponenten hiervon wird vorteilhafterweise erreicht, dass eine geringe Beimengung von Nanopartikeln bereits ausreicht, um eine hohe Mikrowellenanregbarkeit der Sohlen zu erreichen. Als Füllstoff wird Graphit verwendet wobei Graphit als Faden-, Rohr- oder Stäbchen- Nanopartikel bevorzugt sind. Dabei wird eine besonders gute Verteilbarkeit der Füllstoffe innerhalb des Kunststoffwerkstoffes erreicht, sodass schon geringe Energiemengen ausreichen, um den Schuhsohlenkunststoff verformbar zu machen. Es hat sich dabei gezeigt, dass eine Beimengung von weniger als 3%, insbesondere schon eine erfindungsgemäße Beimengung von weniger als 1%, ausreichend ist, um eine Schuheinlegesohle schon nach kürzester Einwirkzeit von Mikrowellen verformbar zu machen. Dabei werden die Eigenschaften des thermoplastischen Kunststoffs nicht oder nur unwesentlich beeinflusst. Gleichzeitig wird mit der geringen Beimengung von Nanopartikeln zum Schuhsohlen-Herstellwerkstoff erreicht, dass auch dessen elastische, optische und haptische Eigenschaften nahezu unverändert bleiben. Durch die geringe Beimengung von Nanopartikeln bleibt auch der Materialpreis für den erfindungsgemäßen Schuhsohlenkunststoff gegenüber dem nicht vermischten Schuhsohlenkunststoff nahezu unverändert. Weiter wird durch die Beimengung von geringsten Mengen an Nanopartikeln erreicht, dass bestehende Werkzeuge bzw. Vorrichtungen zum Herstellen und Verformen von Schuheinlegesohlen bzw. Schuhinnensohlen oder Komponenten hiervon weiterhin verwendet werden können.

Durch die Verwendung von Nanopartikeln wird überraschenderweise, abweichend von der Lehre des Standes der Technik, schon mit geringsten und kleinsten Mengen eine gute durch Mikrowellen angeregte Verformbarkeit von mit erfindungsgemäßem Sohlenkunststoff hergestellten Sohlen und Komponenten hiervon erreicht. Diese sind mit geringstem Zeit- und Energieaufwand verformbar. Wie eingangs bereits erwähnt können alle in der Sohlenherstellung verwendeten Kunststoffe, ob nun Formwerkstoffe oder Klebwerkstoffe mit Nanopartikeln versetzt werden, wodurch eine einfache effektive energetische Anregbarkeit durch Mikrowellen erreicht wird.

Spezielle Vorteile ergeben sich bei der Beimengung von Nanopartikeln zu Schmelzklebstoffen, da diese, beispielsweise als Folien aufgetragen, nicht mehr im Heißprägeverfahren mit einem heißen Prägestempel auf Schmelztemperatur gebracht werden müssen. Die Klebeverbindung kann mit dem erfindungsgemäßen Einsatz von Nanopartikeln als Füllstoff im Heißkleber über bspw. eine einfache (Kalt-) Pressvorrichtung und einem Mikrowellenstrahler erreicht werden. Damit kommt kein heißes Werkzeug mit hitzeempfindlichen Bauteilen in Verbindung, wodurch die Gestaltungsfreiheit für Schuhsohlen verbessert wird bzw. Materialien bei der Schuherstellung verwendet werden können, die zuvor ausgeschlossen waren.

Heißkleber kommen beispielsweise beim Beziehen von Schuheinlegesohlen mit Decken zum Einsatz, jedoch auch bei der Befestigung von orthopädischen Komponenten, wie beispielsweise Pelotten, Keilen, Polstern und Ähnlichem, die nachträglich in einen Schuh oder auf eine Schuheinlegesohle bzw. Schuhinnensohle oder einen Rohling hiervon ein- bzw. aufgebracht werden.

Bei schichtweise aufgebauten Sohlen werden die Schichten meist über einen Heißkleber miteinander verbunden. So können Heißkleber - die im Allgemeinen keine Schutzfolie benötigen, da sie in kaltem Zustand nicht kleben - auf Komponenten aufgetragen werden, welche später auf bereits existierende Sohlen mittels Erwärmung in einem Mikrowellegerät auf Erweichungstemperatur gebracht und festgeklebt werden. Eine derartige Fixierung von Komponenten, insbesondere orthopädischen Komponenten, wie Pelotten, Keilen und Polstern kann von jedermann selbst erfolgen. Dabei ist die Verklebung durch Heißkleber im Allgemeinen stabiler als die mit Adhäsionsklebern, die häufig verwendet werden. Die genaue Positionierung orthopädischer Komponenten sollte jedoch dem Fachmann, d.h. einem orthopädisch ausgebildeten Schuhtechniker oder dergleichen überlasen werden.

Die Anpassung von Schuheinlegesohlen oder Schuhinnensohlen durch Schuhorthopädietechniker wird selbstredend durch Einsatz von Nanopartiklen als Füllstoff für Kunststoffe zur Schuhsohlenherstellung ebenfalls einfacher, wodurch sich die (Behandlungs-)Kosten für eine patientenindividuelle Anpassung einer Schuhsohle deutlich reduzieren. Dies gilt auch, wenn Zusatzteile auf Schuheinlegesohlen bzw. Schuhinnensohlen oder in einen Schuh eingebracht oder aufgebracht werden müssen.

Mit der erfindungsgemäßen Beimengung von Nanopartikeln zu allen Kunststoffen, die in der Schuhsohlenherstellung verwendet werden, ist eine einfache, schnelle und kostengünstige Verformbarkeit von Schuhsohlen nach thermischer Anregung in einer Mikrowelle am Fuß möglich. Dies kann von jedermann selbst erfolgen, jedoch sollte man, speziell bei orthopädischen Problemen, das Verformen der Schuheinlage, Schuhinnensohle oder Komponenten hiervon von einem Schuhorthopädietechniker oder einem Orthopäden durchführen lassen.

Prinzipiell ist es jedoch für jedermann möglich, eine mit dem erfindungsgemäßen Schuhsohlenkunststoff hergestellten Schuheinlegesohle bzw. Schuhinnensohle mittels Mikrowelle zu erwärmen und diese nach Einlegen in einen Schuh der eigenen Fußform anzupassen. Dies kann dadurch erfolgen, dass man den Schuh mit der darin bereits eingelegten Sohle in ein Mikrowellengerät gibt und nach kurzer Mikrowelleneinwirkzeit den Schuh anzieht. Durch die kurze Einwirkzeit der Mikrowellen findet ein geringer Energieeintrag in die Sohle statt, wodurch die Sohle speziell an ihren Außenflächen, - die mit der Fußsohle in Kontakt kommen - nur gering erwärmt wird. Diese innere Erwärmung reicht jedoch aus, damit die Sohle über einen Leisten, oder wie im geschilderten Beispielfall, über einen Fuß gezogen werden kann, damit sich die Sohle optimal an die Fußsohlenform anpasst.

Prinzipiell gibt es zwei Möglichkeiten eine mit dem erfindungsgemäßen Sohlenkunststoff hergestellte Schuhsohle anzupassen: erstens nur die Sohle in der Mikrowelle erwärmen und nach der Erwärmung die Sohle in einen Schuh einzulegen oder zweitens die Sohle zunächst in einen Schuh einzulegen und diesen zusammen mit der Sohle in einen Mikrowellengerät zu erwärmen. In beiden Fällen kann die Schuheinlegesohle bzw. Schuhinnensohle nach energetischer Anregung durch die Mikrowellen über einen Leisten verformt oder einfach durch Anziehen des Schuhs durch den Schuhträger (Patienten) direkt und individuell an die Fußsohlenform angepasst werden. Auf diese Art und Weise - egal ob im Schuh oder nicht - kann die Sohle auch als Schuhwärmer verwendet werden, da die warme Schuheinlegesohle oder Schuhinnensohle als Wärmespeicher agiert.

Überraschenderweise reicht durch die Verwendung der Nanopartikel eine sehr geringe Mikrowellenbeaufschlagung aus, um die Erweichungstemperatur einer Schuhsohle zu erreichen, damit diese verformt werden kann. Dadurch kann auch ein unangenehmes Hitzegefühl an der Fußsohle, an die die Sohle angepasst werden soll, vermeiden werden. Dies gilt für die erfindungsgemäße Beimischung von Nanopartikeln auch für andere Formwerkstoffe, die keine Schaumkunststoffe sind.

In einer Ausführungsform können mehrere vordefinierte bevorzugte Grundformen von Schuheinlege- bzw. Schuhinnensohlen hergestellt werden, die beispielsweise Senkfüße oder Spreizfüße im Allgemeinen abdecken. Die individuelle Anpassung an einen Patientenfuss kann dann in einem Schuhorthopädiegeschäft innerhalb weniger Minuten oder gar Sekunden, bspw. direkt am Kundenfuß erfolgen. Grundsätzlich ist auch eine Anpassung durch den Patienten selbst möglich, jedoch aufgrund der sensiblen Fußanatomie nicht ratsam.

Ein mit Nanopartikeln versetzter Schuhsohlenkunststoff für die Herstellung von Schuheinlegesohlen muss jedoch nicht für die gesamte Abformung/Herstellung der Schuheinlegesohle verwendet werden, sondern kann auch nur bereichsweise eingesetzt werden, um beispielsweise die Sohlen nur in bestimmten sensiblen Bereichen verformbar zu machen. Insbesondere wird man im Bereich des Längsgewölbes, welches fußstützend wirken soll, keine ggf. Verformbarkeit bevorzugen. Jedoch im Fersenbereich, in welchen der Fuß gepolstert aufgenommen werden soll, wird man eine gute Verformbarkeit erreichen wollen. Es ist möglich, mit dem erfindungsgemäßen Schuhsohlenkunststoff einzelne Bereiche einer Schuheinlegesohle unterschiedlich auszugestalten, wobei innerhalb der einzelnen Bereiche eine unterschiedliche Verformbarkeit erzielt werden kann.

Insbesondere wird eine energetisch und zeitlich effektive Anregbarkeit durch Mikrowellen von Schuhsohlen, insbesondere von Schuheinlegesohle bzw. Schuhinnensohlen und Komponenten hiervon dadurch erzielt, dass die Nanopartikel im Schuhsohlenkunststoff feinst möglichst, insbesondere homogen verteilt beigemengt sind. Dadurch ist bevorzug ein homogener Energieeintrag in die Schuheinlegesohle bzw. in Bereiche der Schuheinlegesohle möglich, die verformbar sein sollen. Schon geringste Mengen an Energie sind ausreichend, die Erweichungstemperatur des Schuhsohlenkunststoffes im Bereich der einzelnen Nanopartikel lokal zu erreichen, wodurch die Schuhsohle verformbar wird.

Selbstredend können Schuheinlegesohlen bzw. Schuhinnensohlen oder Komponenten hiervon nicht nur an die jeweilige Fußform des Trägers angepasst werden, sondern können auch an den Schuh, in den die Sohle bzw. die Komponente eingelegt werden soll, exakt angepasst werden. Die hierbei gegebenenfalls existierenden orthopädischen Vorgaben der Schuhe können somit genau durch die Sohlenform adaptiert werden. Damit können etwa Unebenheiten in der Brandsohle oder andere den Tragekomfort der Schuhe störende Einflüsse im Sohlenbereich durch die leichte Anpassbarkeit der erfindungsgemäßen Schuheinlegesohlen bzw. Schuhinnensohlen oder Komponenten hiervon nicht nur einfach und kostengünstig von Jedermann ausgeglichen werden, sondern auch der Tragekomfort von Schuhen erhöht werden, was der Gesundheit und dem Wohlbefinden des Schuhträgers im Allgemeinen zugute kommt.

Ebenfalls vom Erfindungsgedanken umfasst ist dabei die Austauschbarkeit von bereits bestehenden Schuheinlegesohlen bzw. Schuhinnensohlen durch Schuheinlegesohlen bzw. Schuhinnensohlen, die mit dem erfindungsgemäßen mit Nanopartikeln versetzten Schuhsohlenkunststoff hergestellt wurden. Häufig wird ein Schuh entweder nur eine Schuhinnensohle oder nur eine Schuheinlegesohle aufweisen, da der hierfür benötigte Platzbedarf durch die Schuhinnenform begrenzt ist.

In einer Variante der beschriebenen Schuheinlegesohlen bzw. Schuhinnensohlen oder Komponenten hiervon ist weiterhin denkbar, nur bspw. eine mittlere Schaumkunststoffschicht mit Nanopartikeln zu versetzen, um diese als Wärmespeicher bzw. Wärmeakkumulator zu verwenden, etwa in Schuheinlagen für Skischuhe oder (Damen-) Hausschuhen. Solche als Wärmeeinlage verwendete Schuheinlage-/ Schuhinnensohlen können so kurz vor dem Anziehen der Schuhe in einer Mikrowelle erwärmt werden und im erwärmten Zustand in den Schuh eingelegt werden. Selbstredend ist das Anwendungsbeispiel auf alle Schuharten ausdehnbar, die ein herausnehmbare Schuheinlege- oder Schuhinnensohle oder Komponenten hiervon aufweisen. Bei der Verwendung der erfindungsgemäßen Sohle als Wärmeakkumulator muss lediglich beachtet werden, dass die Anregung durch Mikrowollen nicht so stark ist, dass die Schuheinlegesohle bzw. Schuhinnensohle über ihre Erweichungstemperatur erwärmt wird ,da dann beim Einlegen der Sohle diese in ungewünschter Weise verformt werden könnte. Wird die Sohle jedoch über die Erweichungstemperatur erwärmt, lässt man sie einfach vor dem Einlegen der Sohle in den Schuh oder vor dem Anziehen des Schuhs auf unterhalb der Erweichungstemperatur abkühlen. Mit einer derartigen Wärmespeichersohle lässt sich ein großes Plus an Komfort speziell für das Einlegen in kalte Winterstiefel mit einfachen Mitteln von jedermann zu Hause erreichen.

Im Rahmen der Beschreibung der Erfindung wurde von mit Nanopartikeln versetzten Schaumkunststoff gesprochen, wobei hier - für den Fachmann selbstredend - gemeint ist, dass eine der beiden Komponenten zum Ausbilden des Schaumkunststoffes mit Nanopartikeln vor dem Aufschäumen der Sohle mit Nanopartikeln versetzt wurde, und so die Nanopartikel im gesamten Schaumkunststoff der Schuheinlegesohle bzw. Schuhinnensohle oder Komponente hiervon verteilt sind. Bei der Ausbildung einer Schuheinlegesohle bzw. Schuhinnensohle oder einer Komponente hiervon mit einem erfindungsgemäßen Gießwerkstoff bzw. mit einem erfindungsgemäßen Schaumwerkstoff ist somit immer ein von Nanopartikeln versetzten Kunststoff in flüssiger Form bzw. in Pulverform gemeint. So kann beispielsweise im Falle eines Polyurethan-schaumkunststoffes sowohl das Isocyanat als auch das Polyol oder nur eine der beiden Ausgangsstoffe mit Nanopartikeln, bevorzugt mit Graphit-Nanopartikeln, welche eine kugel-, rohr- und/oder fadenförmige Struktur ausbilden, durchsetzt werden.

Bei einem Aufschäumen von EVA wird man die Nanopartikel bevorzugt dem Kunststoffpulver beimengen, bevor dieser aufgeschäumt wird. Im Falle einer Verwendung eines Gießwerkstoffes, wie beispielsweise Polyethylen oder Polyurethan, wird man dem Gießwerkstoff die Nanopartikel in flüssiger Form beimengen, damit diese sich im Gießwerkstoff bevorzugt homogen verteilen. Aufgrund der geringen Größe der Nanopartikel ist eine homogene Verteilung bevorzugt, da dies eine weiterhin homogene Ausbildung der Eigenschaften des Kunststoff in der fertigen Schuhsohle oder Komponente hiervon gewährleistet und zudem den Anteil an beizumengenden Nanoteilchen reduziert. Im Unterschied zum Stand der Technik, in dem Flockengraphit oder Ruß oder ähnlichem Makroteilchen verwendet werden, kann der Anteil an Füllstoffen deutlich reduziert werden. Die Nanopartikel werden dabei bevorzugt möglichst homogen verteilt. Eine homogene Verteilung von Flockengraphit, wie Ruß oder sonstigen Makropartikeln von Graphit, würde eine Beeinträchtigung der Gitterstrukturen des eingesetzten Kunststoffes bewirken, wodurch die Eigenschaften des Kunststoffes stark herabgesetzt werden. Somit erzielt die Erfindung mit der Verwendung von Nanopartikeln, die einem Schuhsohlenkunststoff beigemengt werden, nicht nur eine gute Mikrowellenanregbarkeit, sondern gewährleistet auch die Erhaltung der immanenten Eigenschaften des eingesetzten Schuhsohlen-Basiskunststoffes.

Im Folgenden sollen anhand der Figuren 1 bis 4 bevorzugte Ausführungsbeispiele der vorliegenden Erfindung dargestellt werden, wobei die Ausführungsbeispiele keine abschließende und die Erfindung begrenzende Darstellungen sind. Es zeigen:
- Figur 1: einen Schuh in den eine mit dem erfindungsgemäßen Schuhsohlenkunststoff hergestellt Schuhinnensohle und/oder eine Schuheinlegesohle eingelegt werden kann/können.
- Figur 2: ein Ausführungsbeispiel für eine Schuheinlegesohle aus geschäumtem Schuhsohlenkunststoff mit einem fußstützenden und schaumkunststoff-stabilisierenden Einlegeteil.
- Figur 3: das Ausführungsbeispiel gemäß Figur 2 mit im Vorderfußbereich, im Mittelfußbereich und im Fersenbereich unterschiedlich ausgebildeten Materialhärten für den verwendeten geschäumten Schuhsohlenkunststoff.
- Figur 4: die Schaumkunststoffschuheinlegesohle gemäß Figur 2, welche mit einer Decke versehen ist, die mit einem erfindungsgemäßen Heißkleber mit dem Schaumkunststoff verbunden ist.

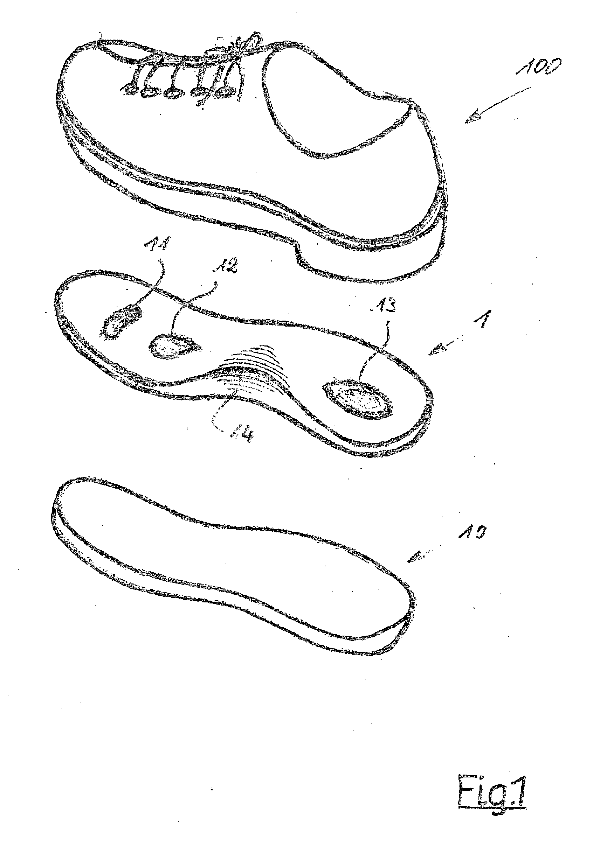

Figur 1 zeigt einen Schuh 100 und eine darin einlegbare Schuhinnensohle 10 sowie eine alternativ oder gegebenenfalls auch zusätzliche einlegbare Schuheinlegesohle 1. Dabei sind die beiden Schuhsohlen gemäß Figur 1 mit dem erfindungsgemäßen Schuhsohlenkunststoff, welcher mit Nanopartikeln versetzt ist, hergestellt. Die beiden Schuhsohlen, so wie sie in Figur 1 gezeigt sind, können dabei aus einem Gussmaterial, wie beispielsweise aus PU (Polyurethan) oder EVA (Ethylen-Vinyl-Acetat), also einem Vollmaterial, gegossen sein, oder durch einen Schaumkunststoff, wie beispielsweise einem Polyurethan-Schaum, ausgeschäumt sein. Für die Verwirklichung des Erfindungsgedanken ist es dabei unerheblich, ob die Schuhinnensohle 10 mit demselben Material, wie die Schuheinlegesohle 1 hergestellt wurde oder die beiden Schuhsohlen mit unterschiedlichen Materialien hergestellt wurden.

Speziell bei orthopädischen Schuheinlegesohlen (vgl. Fig. 1, Bezugsziffer 1) wird man an der Schuheinlegesohle bevorzugt orthopädische Komponenten, wie beispielsweise ein Zehengrundpolster 11 und/oder eine Pelotte 12 und/oder ein Fersenpolster 13 vorsehen. Gleichfalls wird man bei orthopädischen Schuheinlegesohlen bevorzugt ein Längsgewölbe 14 ausbilden, welches den Fuß unterstützen soll. Generell können hierbei alle Elemente aus einem mit Nanopartikeln versetzten Schuhsohlenkunststoff ausgebildet werden, wodurch sie, nach energetischer Anregung durch Mikrowellen, individuell an eine Fußform anpassbar sind.

In weiteren bevorzugten Anwendungsbeispielen wird man beispielsweise für das Fersenpolster einen weichen Kunststoff verwenden, welcher in seiner Anpassbarkeit an den Fuß nicht notwendigerweise mit Nanopartikeln versetzt werden muss. Gleiches gilt für die weiteren Elemente bzw. Komponenten einer Schuheinlegesohle. Die hier bzgl. Schuheinlegesohlen aufgezeigten Möglichkeiten gelten analog auch für Schuheinlegesohlen. Generell kann für jeden einzelnen der verwendeten Schuhsohlenkunststoffe entschieden werden, ob dieser durch Mikrowellen thermisch anregbar und somit verformbar sein soll oder nicht.

Welche Teile, bzw. Komponenten, bzw. Materialien mit Nanopartikeln versetzt werden sollen, ist im Einzelfalle von der gewünschten Anwendung abhängig. Hierbei ist insbesondere zu berücksichtigen, welche Teile eines Fußes unterstützt bzw. welche Fußbereiche abgepolstert werden sollen. Für die entsprechenden Anwendungen sind dementsprechend auch die gewünschten Materialhärten zum Erreichen der gewünschten Anwendung bzw. des gewünschten Effektes zu berücksichtigen.

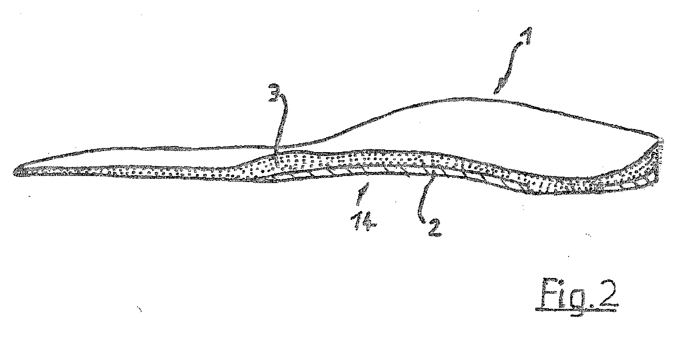

So zeigt Figur 2 beispielsweise eine Schuheinlegesohle 1 mit einem relativ steif ausgebildeten Einlegeteil 2, mit dem ein Längsgewölbe 14 ausgebildet wird, das das Fußgewölbe des Trägers der Schuheinlegesohle unterstützen soll. Hierbei kann das Material des Einlegeteils 2 beispielsweise aus mit Nanopartikeln versetzten EVA bestehen und so durch eine thermische Anregung mittels Mikrowellen exakt dem Fußgewölbe des Trägers der Schuheinlegesohle angepasst werden.

Die in Figur 2 gezeigte Schuheinlegesohle weist über dem Kernteil bzw. Einlegeteil 2 eine beispielsweise aus PU-Schaumstoff geschäumte Polsterschicht 3 auf, die zum Abpolstern der Fußsohlenform gedacht ist. Selbstredend kann auch der Schaumkunststoff aus mit Nanopartikein versetztem Schuhsohlenschaumkunststoff bestehen, wodurch die Polsterform des eingesetzten Schaumkunststoffes 3 ebenfalls individuell an die Fußform angepasst werden kann. Damit ist die Sohle nicht nur in ihrer stützenden Wirkung, sondern auch in ihrer polsternden bzw. abfedernden Wirkung individuell, nach Anregung durch Mikrowellen, an eine Fußform exakt anpassbar. Auch in diesem Ausführungsbeispiel gilt, dass zur Erfüllung des Erfindungsgedankens ausreicht, wenn nur einer der beiden Kunststoffe mit Nanopartikeln zur Mikrowellenanregbarkeit versetzt ist.

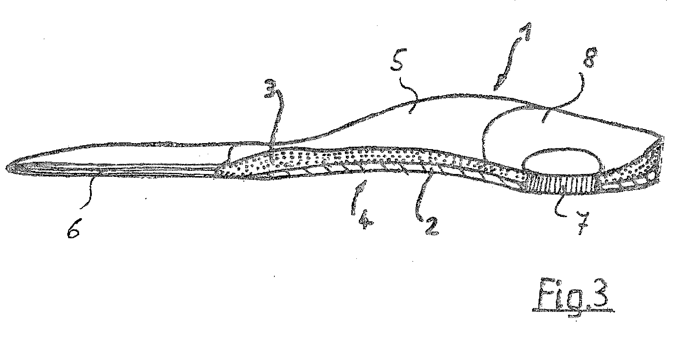

In Figur 3 ist eine Schuheinlegesohle 1 gezeigt, welche mehrere Materialbereiche aufweist, die im Allgemeinen einen Vorderfußbereich 6, einen Mittelfußbereich 5, einen Rückfußbereich 8 und einen darin eventuell angeordneten Fersenbereich 7 darstellen. Die einzelnen Bereiche 5 bis 8 können hierbei mit unterschiedlichen Materialien oder mit nur einer Materialsorte mit unterschiedlichen Härten ausgebildet sein. Dabei wird man für die individuelle Anpassbarkeit bevorzugt dem Material/den Materialien vor der Ausformung der einzelnen Bereiche Nanopartikel beimengen, um eine Mikrowellenanregbarkeit der Materialien und damit eine Verformbarkeit der Sohle in den einzelnen Bereichen zu erreichen. Auch hier sind sowohl Schaum- als auch Gießwerkstoffe für die Ausbildung einer Schuhsohle einsetzbar.

Die in Figur 3 gezeigte Schuheinlegesohle 1 weist weiter ein Einlegeteil 4 für die Unterstützung des Fußgewölbes auf. Das Einlegeteil 4 zeigt eine gewölbte Form, welches das Längsgewölbe der Schuheinlegesohle ausbildet, und im Falle der Ausbildung der Polsterung der Schuheinlegesohle 1 mit Schaumkunststoff den Schaumkunststoff stabilisiert.

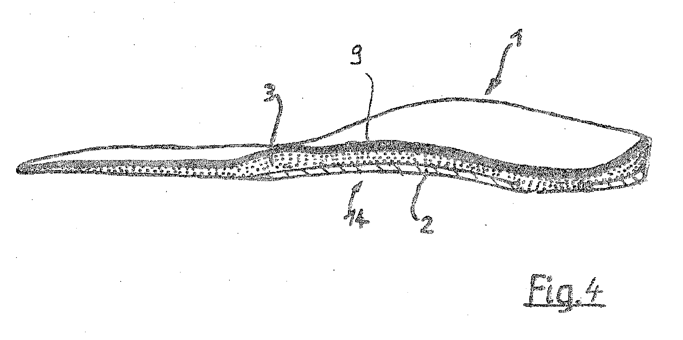

Figur 4 zeigt ein weiteres Ausführungsbeispiel einer Schuheinlegesohle 1, die mit dem erfindungsgemäßen Schuhsohlenkunststoff ausgebildet wurde. Ein ein Längsgewölbe 14 ausbildendes Einlegeteil 2, welches eine fußstützende Wirkung zeigt, ist dabei von einem Schuhsohlenschaumkunststoff 3 bedeckt, der die eigentliche Schuheinlegesohlenform komplettiert. Der Schuhsohlenschaumkunststoff 3 kann hier, ebenso wie das Material des Einlegeteiles 2, Nanopartikel zur Mikrowellenanregbarkeit der beiden Werkstoffe aufweisen. Auf diese Schaumkunststoffschicht wurde in dem Ausführungsbeispiel gemäß Figur 4 eine Decke 9 mit Heißkleber aufgebracht, wobei der Heißkleber ebenfalls mit Nanopartikeln versetzt ist und seine klebende Wirkung durch Anregen mit Mikrowellen entfaltet. Nach Entfaltung der Klebewirkung kann die Decke, beispielsweise aus Alcantara, Leder oder ein Vlies, durch Aufbringen eines leichten mechanischen Drucks mit der Schaumkunststoffschicht verbunden werden, indem die Sohle Mikrowellen ausgesetzt wird. Wie leicht vorstellbar ist, kann die Decke auch eine weitere Kunststoffschicht darstellen, die mit dem Schaumkunststoff ebenfalls mit einem mit Nanopartikeln versetzten Heißkleber verbunden werden kann. Die Deckschicht 9 kann bevorzugt selbst aus einem mit Nanopartikeln durchsetzten Schuhsohlenkunststoff bestehen der sich nach thermischer Anregung der Nanopartikel durch Mikrowellen im erweichten Zustand mit dem Schaumkunststoff in der Art eines Schmelzklebers verbindet.

Werden in einem weiteren bevorzugten Ausführungsbeispiel mehrere Kunststoffe mit unterschiedlichen Erweichungstemperaturen bei der Herstellung einer erfindungsgemäßen Schuhsohle verwendet, können durch Vorgabe unterschiedlicher Mikrowellen-Einwirkzeiten nur einer der Kunststoffe oder auch mehrere der verwendeten Kunststoff zur selben Zeit verformbar gemacht werden. So kann bspw. zur Ausbildung eines Längsgewölbe ein Material mit hoher Erweichungstemperatur verwendet werden, das von einem Orthopädiefachmann nach relativ längerer Mikrowellen-Einwirkzeit individuell anpassbar ist, wobei das Polstermaterial schon bei relativ kurzer Mikrowellen-Einwirkzeit vom Schuhsohlenträger selbst individuell anpassbar ist. Dies lässt sich durch Vorgabe der Einwirkzeiten vorgeben bzw. steuern, sodass eine individuelle Anpassung des Tragekomforts durch den Sohlenträger selbst erfolgen kann.

Für den Fachmann ist es hierbei leicht verständlich, dass die angegebenen Beispiele und Ausführungsformen die Erfindungsidee nicht beschränken und nur zum Zweck der besseren Erläuterung der Erfindungsidee dienen. Durch die erfindungsgemäße Beimengung von Nanopartikel zu einem oder mehreren Kunststoffen der Schuheinlegesohlen- bzw. Schuhinnensohlenherstellung oder der Herstellung von Schuh- oder Schuhsohlenkomponenten sind somit nicht nur einfach anpassbare Scheinlegesohlen bzw. Schuhinnensohlen oder Komponenten hiervon ausbildbar, sondern es wird durch innere energetische Anregbarkeit durch Mikrowellen schnell und kostengünstig ein Zustand der Sohle oder der Komponenten hiervon erreicht, in der die Sohle oder die Komponenten individuell und wiederholbar an eine Fuß- oder Schuhinnenform angepasst werden können.

## Patentansprüche

1. Elastischer Schuhsohlenkunststoff zur Herstellung von Schuheinlegesohlen (1), Schuhinnensohlen (10) oder orthopädischer Komponenten (2, 11, 12, 13, 14) hiervon, der durch Zusatz eines Füllstoffes mit Mikrowellen derart anregbar ist, dass sich der Schuhsohlenkunststoff auf Erweichungstemperatur erwärmt,
**dadurch gekennzeichnet,**
**dass** als Füllstoff Graphit-Nanopartikel mit einem Anteil von weniger als 3 Gew.-% beigemengt sind.

2. Schuhsohlenkunststoff nach Anspruch 1, **dadurch gekennzeichnet, dass** die Nanopartikel kugel-, rohr- und/oder fadenförmige Graphitnanopartikel sind.

3. Schuhsohlenkunststoff nach einem der vorherigen Ansprüche, **dadurch gekennzeichnet, dass** der Anteil an Füllstoff im Schuhsohlenkunststoff weniger als 1 Gew.-% beträgt.

4. Schuhsohlenkunststoff nach einem der vorherigen Ansprüche, **dadurch gekennzeichnet, dass** der Schuhsohlenkunststoff ein thermoplastischer Kunststoff ist.

5. Schuhsohlenkunststoff nach einem der Ansprüche 1 bis 4, **dadurch gekennzeichnet, dass** der Schuhsohlenkunststoff ein Heißkleber ist, mit dem Einzelteile von Schuheinlegesohlen (1), Schuhinnensohlen (10) oder Komponenten (2, 11, 12, 13, 14) hiervon miteinander verbindbar sind.

6. Schuhsohlenkunststoff nach einem der vorherigen Ansprüche, **dadurch gekennzeichnet, dass** der Schuhsohlenkunststoff eine Komponente eines Kunststoffs ist, der zur Abformung von Schuheinlegesohlen (1), Schuhinnensohlen (10) oder Komponenten (2, 11, 12, 13, 14) hiervon verwendbar ist.

7. Schuhsohlenkunststoff nach Anspruch 6, **dadurch gekennzeichnet, dass** der Schuhsohlenkunststoff eine Komponente eines Schaumkunststoffes, der zum Aufschäumen von Schuheinlegesohlen (1), Schuhinnensohlen (10) oder Komponenten (2, 11, 12, 13, 14) hiervon verwendbar ist.

8. Schuhsohlenkunststoff nach Anspruch 7, **dadurch gekennzeichnet, dass** der Schaumkunststoffes eine Komponente eines Polyurethan-Schaumkunststoffes ist.

9. Elastische, orthopädisch vorgeformte Schuheinlegesohle (1), Schuhinnensohle (10) oder Komponente (2, 11, 12, 13, 14) hiervon hergestellt mit einem Schuhsohlenkunststoff nach einem der Ansprüche 1 bis 8.

10. Schuheinlegesohle, Schuhinnensohle oder Komponente hiervon nach Anspruch 9, die einen Vorderfußbereich (6), einen Mittelfußbereich (5), einen Rückfußbereich (8) und/oder Fersenbereich (7) aufweist, wobei im Mittelfußbereich (5) und /oder im Rückfußbereich (8) ein vorgefertigtes fußstützendes und sohlenstabilisierendes Formteil (2) angeordnet ist.

11. Schuheinlegesohle (1), Schuhinnensohle (10) oder Komponente (2, 11, 12, 13, 14) hiervon nach Anspruch 9 oder 10, bei der die einzelnen Bereiche aus unterschiedlichen Polyurethanschäumen ausgebildet sind, die unterschiedliche Konzentrationen von Nanopartikeln und/oder Härten und/oder Farben aufweisen.

12. Schuheinlegesohle (1), Schuhinnensohle (10) oder Komponente (2, 11, 12, 13, 14) hiervon nach einem der Ansprüche 9 bis 11, die fußseitig ein Längsgewölbe aufweist und/oder schuhseitig eben ist.

13. Schuheinlegesohle (1), Schuhinnensohle (10) oder Komponente (2, 11, 12, 13, 14) hiervon nach einem der Ansprüche 9 bis 12, die fußseitig mit einer Decke versehen ist.

14. Schuheinlegesohle (1), Schuhinnensohle (10) oder Komponente (2, 11, 12, 13, 14) hiervon nach einem der Ansprüche 9 bis 13, wobei ein Einzelteil der Schuheinlegesohle, Schuhinnensohle oder Komponente hiervon mit einem weiteren Einzelteil einer Schuhinnensohle oder Schuheinlegesohle mit einem Heißkleber nach Anspruch 6 verbunden ist.

15. Verfahren zum Herstellen eines Schuhsohlenkunststoffs nach einem der Ansprüche 1 bis 8, **dadurch gekennzeichnet, dass** einem in der Schuhsohlen- oder Schuhsohlenkomponentenherstellung verwendeten Kunststoff Nanopartikel beigemengt werden, die durch Mikrowellen energetisch anregbar sind.

16. Verfahren zum Herstellen einer Schuheinlegesohle (1), einer Schuhinnensohle (10) oder einer Komponente (2, 11, 12, 13, 14) hiervon, bei welchem eine Abformvorrichtung mit einem mit Nanopartikel versetzten Kunststoff nach einem der Ansprüche 1-8 zur Abformung einer orthopädisch vorgeformten Sohlen- bzw. Komponenten (2, 11, 12, 13, 14) -Grundform befüllt wird.

17. Verfahren zum Verformen einer nach einem der Ansprüche 9 bis 16 hergestellten Schuheinlegesohle (1), Schuhinnensohle (10) oder Komponente (2, 11, 12, 13, 14) hiervon, mit den folgenden Schritten:
- Einbringen der Schuheinlegesohle (1), Schuhinnensohle (10) oder Komponente (2, 11, 12, 13, 14) hiervon in ein Mikrowellengerät,
- Beaufschlagen der Schuheinlegesohle (1), Schuhinnensohle (10) oder Komponente (2, 11, 12, 13, 14) hiervon mit Mikrowellen für eine vorbestimmte Zeit mit einer vorbestimmten Mikrowellenleistung, um die Nanopartikel energetisch anzuregen, damit diese ihre erhöhte Temperatur an den Kunststoff weiterleiten,
- Entfernen der erwärmten Schuheinlegesohle (1), Schuhinnensohle (10) oder Komponente (2, 11, 12, 13, 14) hiervon aus dem Mikrowellengerät,
- Verformen der Schuheinlegesohle (1), Schuhinnensohle (10) oder Komponente (2, 11, 12, 13, 14) hiervon nach orthopädischen Gesichtspunkten.

18. Verfahren nach Anspruch 17, bei dem die Schuheinlegesohle (1), Schuhinnensohle (10) oder Komponente (2, 11, 12, 13, 14) hiervon nach dem energetischen Anregen der Nanopartikel in einen Schuh eingelegt wird und die Verformung der Schuheinlegesohle (1), Schuhinnensohle (10) oder Komponente (2, 11, 12, 13, 14) hiervon nach orthopädischen Gesichtspunkten dadurch erfolgt, dass der Schuh mit der erwärmten Schuheinlegesohle (1), Schuhinnensohle (10) oder Komponente (2, 11, 12, 13, 14) hiervon über einen Leisten oder einen Fuß gezogen wird.

19. Verfahren nach Anspruch 17, bei dem die Schuheinlegesohle (1), Schuhinnensohle (10) oder Komponente (2, 11, 12, 13, 14) hiervon in einen Schuh eingelegt, die Schuheinlegesohle (1), Schuhinnensohle (10) oder Komponente (2, 11, 12, 13, 14) hiervon zusammen mit dem Schuh in einem Mikrowellenofen energetisch angeregt und der Schuh mit der so erwärmten Schuheinlegesohle (1), Schuhinnensohle (10) oder Komponente (2, 11, 12, 13, 14) hiervon über einen Leisten oder einen Fuß gezogen wird.

## Claims

1. Elastic shoe sole plastic for producing shoe insoles (1), shoe inner soles (10) or orthopaedic components (2, 11, 12, 13, 14) thereof, which, as a result of the addition of a filler, can be excited by microwaves in such a way that the shoe sole plastic is heated to softening temperature,
**characterized in that**
the filler added is graphite nanoparticles having a proportion of less than 3% by weight.

2. Shoe sole plastic according to Claim 1, **characterized in that** the nanoparticles are spherical, tubular and/or thread-like graphite nanoparticles.

3. Shoe sole plastic according to one of the preceding claims, **characterized in that** the proportion of filler in the shoe sole plastic is less than 1% by weight.

4. Shoe sole plastic according to one of the preceding claims, **characterized in that** the shoe sole plastic is a thermoplastic.

5. Shoe sole plastic according to one of Claims 1 to 4, **characterized in that** the shoe sole plastic is a hot melt adhesive, with which individual parts of shoe insoles (1), shoe inner soles (10) or components (2, 11, 12, 13, 14) thereof can be connected to one another.

6. Shoe sole plastic according to one of the preceding claims, **characterized in that** the shoe sole plastic is a component of a plastic which can be used to mould shoe insoles (1), shoe inner soles (10) or components (2, 11, 12, 13, 14) thereof.

7. Shoe sole plastic according to Claim 6, **characterized in that** the shoe sole plastic is a component of a plastic foam which can be used to foam-form shoe insoles (1), shoe inner soles (10) or components (2, 11, 12, 13, 14) thereof.

8. Shoe sole plastic according to Claim 7, **characterized in that** the plastic foam is a component of a polyurethane plastic foam.

9. Elastic, orthopaedically pre-formed shoe insole (1), shoe inner sole (10) or component (2, 11, 12, 13, 14) thereof produced with a shoe sole plastic according to one of Claims 1 to 8.

10. Shoe insole, shoe inner sole or component thereof according to Claim 9, which has a front foot area (6), a middle foot area (5), a rear foot area (8) and/or a heel area (7), a prefabricated foot-supporting and sole-stabilizing moulding (2) being arranged in the middle foot area (5) and/or in the rear foot area (8).

11. Shoe insole (1), shoe inner sole (10) or component (2, 11, 12, 13, 14) thereof according to Claim 9 or 10, in which the individual areas are formed from different polyurethane foams, which have different concentrations of nanoparticles and/or hardeners and/or colours.

12. Shoe insole (1), shoe inner sole (10) or component (2, 11, 12, 13, 14) thereof according to one of Claims 9 to 11, which has a longitudinal arch on the foot side and/or is flat on the shoe side.

13. Shoe insole (1), shoe inner sole (10) or component (2, 11, 12, 13, 14) thereof according to one of Claims 9 to 12, which is provided with a cover on the foot side.

14. Shoe insole (1), shoe inner sole (10) or component (2, 11, 12, 13, 14) thereof according to one of Claims 9 to 13, an individual part of the shoe insole, shoe inner sole or component thereof being connected to a further individual part of a shoe inner sole or shoe insole with a hot melt adhesive according to Claim 6.

15. Method for producing a shoe sole plastic according to one of Claims 1 to 8, **characterized in that** nanoparticles which can be excited energetically by microwaves are added to plastic used in the shoe sole or shoe sole component production.

16. Method for producing a shoe insole (1), a shoe inner sole (10) or a component (2, 11, 12, 13, 14) thereof, in which a moulding device is filled with a plastic according to one of Claims 1-8 mixed with nanoparticles in order to mould an orthopaedically preformed sole or component (2, 11, 12, 13, 14) basic shape.

17. Method for forming a shoe insole (1), shoe inner sole (10) or component (2, 11, 12, 13, 14) thereof produced according to one of Claims 9 to 16, comprising the following steps:
- introducing the shoe insole (1), shoe inner sole (10) or component (2, 11, 12, 13, 14) thereof into a microwave apparatus;
- applying microwaves to the shoe insole (1), shoe inner sole (10) or component (2, 11, 12, 13, 14) thereof for a predetermined time with a predetermined microwave output in order to excite the nanoparticles energetically in order that the latter pass on their elevated temperature to the plastic,
- removing the heated shoe insole (1), shoe inner sole (10) or component (2, 11, 12, 13, 14) thereof from the microwave apparatus,
- forming the shoe insole (1), shoe inner sole (10) or component (2, 11, 12, 13, 14) thereof in accordance with orthopaedic points of view.

18. Method according to Claim 17, in which, following the energetic excitation of the nanoparticles, the shoe insole (1), shoe inner sole (10) or component (2, 11, 12, 13, 14) thereof is inserted into a shoe and the forming of the shoe insole (1), shoe inner sole (10) or component (2, 11, 12, 13, 14) thereof in accordance with orthopaedic points of view is carried out by the shoe having the heated shoe insole (1), shoe inner sole (10) or component (2, 11, 12, 13, 14) thereof being drawn over a last or a foot.

19. Method according to Claim 17, in which the shoe insole (1), shoe inner sole (10) or component (2, 11, 12, 13, 14) thereof is inserted into a shoe, the shoe insole (1), shoe inner sole (10) or component (2, 11, 12, 13, 14) thereof, together with the shoe, is excited energetically in a microwave oven, and the shoe, together with the shoe insole (1), shoe inner sole (10) or component (2, 11, 12, 13, 14) thereof heated in this way, is drawn over a last or a foot.

## Revendications

1. Matière synthétique élastique pour semelles de chaussure, destinée à fabriquer des semelles (1) de garniture de chaussure, des semelles intérieures (10) de chaussure ou des composants orthopédiques (2, 11, 12, 13, 14) de ces semelles, et qui peut, par addition d'une charge, être excitée par des microondes de telle sorte que la matière synthétique pour semelles de chaussure s'échauffe à une température d'amollissement,
**caractérisée en ce que**
on y ajoute comme charge des nanoparticules de graphite à une teneur inférieure à 3 % en poids.

2. Matière synthétique pour semelles de chaussure selon la revendication 1, **caractérisée en ce que** les nanoparticules sont des nanoparticules sphériques, tubulaires et/ou filiformes de graphite.

3. Matière synthétique pour semelles de chaussure selon l'une des revendications précédentes, **caractérisée en ce que** la teneur en charge dans la matière synthétique pour semelles de chaussure est inférieure à 1 % en poids.

4. Matière synthétique pour semelles de chaussure selon l'une des revendications précédentes, **caractérisée en ce que** la matière synthétique pour semelles de chaussure est une matière synthétique thermoplastique.

5. Matière synthétique pour semelles de chaussure selon l'une des revendications 1 à 4, **caractérisée en ce que** la matière synthétique pour semelles de chaussure est une colle à chaud par laquelle des parties individuelles de semelles (1) de garniture de chaussure, des semelles intérieures (10) de chaussure ou des composants (2, 11, 12, 13, 14) de ces semelles peuvent être reliés les unes aux autres.

6. Matière synthétique pour semelles de chaussure selon l'une des revendications précédentes, **caractérisée en ce que** la matière synthétique pour semelles de chaussure est un composant d'une matière synthétique qui peut être utilisé pour former des semelles (1) de garniture de chaussure, des semelles intérieures (10) de chaussure ou des composants (2, 11, 12, 13, 14) de ces semelles.

7. Matière synthétique pour semelles de chaussure selon la revendication 6, **caractérisée en ce que** la matière synthétique pour semelles de chaussure est un composant d'une matière synthétique en mousse qui peut être utilisé pour mousser des semelles (1) de garniture de chaussure, des semelles intérieures (10) de chaussure ou des composants (2, 11, 12, 13, 14) de ces semelles.

8. Matière synthétique pour semelles de chaussure selon la revendication 7, **caractérisée en ce que** la matière synthétique en mousse est un composant d'une matière synthétique en mousse de polyuréthane.

9. Semelles (1) de garniture de chaussure, semelles intérieures (10) de chaussure ou composants (2, 11, 12, 13, 14) de ces semelles, élastiques, orthopédiques et préformés, fabriqués à l'aide d'une matière synthétique pour semelles de chaussure selon l'une des revendications 1 à 8.

10. Semelles de garniture de chaussure, semelles intérieures de chaussure ou composants de ces semelles selon la revendication 9, qui présentent une partie avant (6) de pied, une partie centrale (5) de pied, une partie arrière (8) de pied et/ou une partie (7) de talon, une pièce moulée (2) préfabriquée, de soutien du pied ou de stabilisation de la semelle étant disposée dans la partie centrale (5) de pied ou dans la partie arrière (8) de pied.

11. Semelles (1) de garniture de chaussure, semelles intérieures (10) de chaussure ou composants (2, 11, 12, 13, 14) de ces semelles selon les revendications 9 ou 10, dans lesquelles les différentes parties sont formées de mousses de polyuréthane différentes qui présentent différentes concentrations de nanoparticules, de durcisseur et/ou de colorant.

12. Semelles (1) de garniture de chaussure, semelles intérieures (10) de chaussure ou composants (2, 11, 12, 13, 14) de ces semelles selon l'une des revendications 9 à 11, qui présentent du côté du pied un bombement longitudinal et/ou qui sont plans du côté de la chaussure.

13. Semelles (1) de garniture de chaussure, semelles intérieures (10) de chaussure ou composants (2, 11, 12, 13, 14) de ces semelles selon l'une des revendications 9 à 12, dotés d'un recouvrement du côté du pied.

14. Semelles (1) de garniture de chaussure, semelles intérieures (10) de chaussure ou composants (2, 11, 12, 13, 14) de ces semelles selon l'une des revendications 9 à 13, dans laquelle une partie de la semelle de garniture de chaussure, de la semelle intérieure de chaussure ou d'un composant de ces semelles est reliée à une autre partie distincte d'une semelle intérieure de chaussure, d'une semelle de garniture de chaussure à l'aide d'un adhésif à chaud selon la revendication 6.

15. Procédé de fabrication d'une matière synthétique pour semelle de chaussure selon l'une des revendications 1 à 8, **caractérisé en ce que** des nanoparticules qui peuvent être excitées par l'énergie de microondes sont ajoutées à la matière synthétique utilisée pour la fabrication de semelles de chaussure ou de composants de semelles de chaussure.

16. Procédé de fabrication d'une semelle de garniture (1) de chaussure, d'une semelle intérieure (10) de chaussure ou d'un composant (2, 11, 12, 13, 14) de ces semelles selon l'une des revendications 1 à 8, dans lequel un dispositif de moulage est rempli d'une matière synthétique additionnée de nanoparticules selon l'une des revendications 1 à 8 pour former la forme de base orthopédiquement préformée de la semelle ou de composants (2, 11, 12, 13, 14) de semelle.

17. Procédé de moulage d'une semelle de garniture (1) de chaussure, d'une semelle intérieure (10) de chaussure ou d'un composant (2, 11, 12, 13, 14) de ces semelles selon l'une des revendications 9 à 16, le procédé présentant les étapes suivantes :
placement de la semelle de garniture (1) de chaussure, de la semelle intérieure (10) de chaussure ou d'un composant (2, 11, 12, 13, 14) de ces semelles dans un appareil à microondes,
application de microondes sur la semelle de garniture (1) de chaussure, sur la semelle intérieure (10) de chaussure ou sur un composant (2, 11, 12, 13, 14) de ces semelles pendant une durée prédéterminée et à une puissance de microondes prédéterminée pour exciter énergétiquement des nanoparticules de telle sorte qu'elles transfèrent leur température plus élevée à la matière synthétique,
enlèvement de la semelle de garniture (1) de chaussure, de la semelle intérieure (10) de chaussure ou du composant (2, 11, 12, 13, 14) de ces semelles hors de l'appareil à microondes et
façonnage de la semelle de garniture (1) de chaussure, de la semelle intérieure (10) de chaussure ou du composant (2, 11, 12, 13, 14) de ces semelles d'un point de vue orthopédique.

18. Procédé selon la revendication 17, dans lequel la semelle de garniture (1) de chaussure, la semelle intérieure (10) de chaussure ou le composant (2, 11, 12, 13, 14) de ces semelles sont placés dans une semelle après excitation énergétique des nanoparticules et dans lequel le façonnage de la semelle de garniture (1) de chaussure, de la semelle intérieure (10) de chaussure ou du composant (2, 11, 12, 13, 14) de ces semelles du point de vue orthopédique s'effectue par le fait que la chaussure dotée de la semelle de garniture (1) de chaussure, de la semelle intérieure (10) de chaussure ou du composant (2, 11, 12, 13, 14) de ces semelles sont étirés sur une languette ou un pied.

19. Procédé selon la revendication 17, dans lequel la semelle de garniture (1) de chaussure, la semelle intérieure (10) de chaussure ou le composant (2, 11, 12, 13, 14) de ces semelles sont placés dans une semelle, la semelle de garniture (1) de chaussure, la semelle intérieure (10) de chaussure ou le composant (2, 11, 12, 13, 14) de ces semelles sont excités énergétiquement dans un four à microondes en même temps que la chaussure et la chaussure dotée de la semelle de garniture (1) de chaussure, la semelle intérieure (10) de chaussure ou le composant (2, 11, 12, 13, 14) de ces semelles est alors étirée au-dessus d'une languette ou d'un pied.
